# EUROPÄISCHE PATENTSCHRIFT

(11) **EP 0 644 000 B1**
(45) Veröffentlichungstag und Bekanntmachung des Hinweises auf die Patenterteilung: **11.08.1999**
(21) Anmeldenummer: 94114346.3
(22) Anmeldetag: 13.09.1994
(51) Int. Cl.: B09B 3/00, B02C 19/18, C04B 20/00

(54) **Verfahren zur Aufbereitung von faserstoffhaltigen Materialien**
Method for the treatment of fibre-containing materials
Procédé pour le traitement de matériaux contenant des fibres

(30) Priorität: 21.09.1993 DE 4332031
(43) Veröffentlichungstag der Anmeldung: 22.03.1995
(73) Patentinhaber: NIKKA Norddeutsche Isolierwerke GmbH Co. KG. i.K., 30453 Hannover (DE)
(72) Erfinder: Gock, Eberhard, Prof.Dr.-Ing., D-38640 Goslar (DE); Florescu, Roman, D-38642 Goslar (DE); Betgovargez, Wiliamin, Dipl.-Min., D-38678 Clausthal Zellerfeld (DE)
(74) Vertreter: Cohausz & Florack

(56) Entgegenhaltungen:
- DE-A- 4 034 026
- DE-A- 4 124 620
- DE-C- 4 112 445
- US-A- 4 846 408
- DATABASE WPI Week 8803, Derwent Publications Ltd., London, GB; AN 88-019434 & SU-A-1 313 824 (LENGD MECH INST) 30. Mai 1987
- DATABASE WPI Week 7824, Derwent Publications Ltd., London, GB; AN 78-42938A & JP-A-53 049 369 (TORAY INDS INC) 4. Mai 1978

## Beschreibung

Die Erfindung betrifft die Aufbereitung von natürlichen bzw. synthetischen faserstoffhaltigen Materialien, insbesondere asbesthaltigen Materialien derart, daß durch Kombination von Kaltversprödung, mehrstufiger Aufschlußmahlung und Behandlung im Zentrifugalfeld faserfreie Stoffsuspensionen bzw. Pulver erzeugt werden, die direkt zu Formsteinen verarbeitet bzw. als Rohstoffe eingesetzt werden können und damit eine Entsorgung entfällt.

Grundsätzlich stellen lungengängige Fasern in der Raum- und Außenluft ein Gesundheitsrisiko dar. Bei Fasern von Mineralwolldämmstoffen liegen Grenzwerte für die atembare Arbeitsplatzkonzentration in Deutschland noch nicht fest. Der niedrigste bekannte Grenzwert beträgt 1 Faser/cm³, d.h. 1 Mio. Fasern/m³. In den Niederlanden wird ein Grenzwert von 5 Fasern/cm³ für Steinwolle und Glaswollfasern eingeführt (U. Draeger: "Anstehende behördliche Verfahren in Deutschland im Zusammenhang mit der Herstellung und dem Einsatz von Mineralwolldämmstoffen", Manuskript zum Vortrag auf der Mitgliederversammlung der Bundesfachabteilung Wärme-, Kälte-, Schall- und Brandschutz der Deutschen Bauindustrie, Berlin 18.10.1991). Für Asbest gilt in Deutschland ab 01.11.1994 laut Neufassung der Gefahrstoffverordnung ein fast vollständiges Anwendungsverbot. Der Umgang mit Asbest beschränkt sich daher im wesentlichen auf die Sanierung. Die Gefährlichkeit wird von der Fasergeometrie bestimmt. Kritisch sind folgende Abmessungen: Länge größer 5 µm, Dicke = kleiner 3 µm und ein Verhältnis von Länge zu Dicke über 3:1.

Nach einer Schätzung muß in der Bundesrepublik mit einer zu entsorgenden Asbestmenge von 32 Mio. Tonnen gerechnet werden (Geffers, U. u.a. : "Asbestentsorgungszentren - Neue Wege in der Asbestsanierung" Entsorgungs-Technik, Juli/August 1993). Vor diesem Hintergrund sind verschiedenste Verfahrensvorschläge entwickelt worden, denen physikalische, chemische und thermische Methoden zugrunde liegen.

Als physikalische Behandlungsmethode wird in der DE 41 24 620 A1 vorgeschlagen, Asbestabfälle fein zu zerkleinern, diese mit trocken oder flüssig vorliegendem Sondermüll zu vermischen und unter Zugabe von Zement und Wasser zu einer Suspension zu vermischen, die eine spätere Betongüte nicht unter B5 nach DIN ergibt. Gemäß dem Ausführungsbeispiel wird eine Suspension aus zerkleinertem Asbestzement mit einer Körnung von 0 bis 4 mm eingesetzt. In der Patentschrift DE 40 34 026 wird ein Verfahen beschrieben, bei dem Asbestabbruchmaterialien zerkleinert und als Pulpe in untertägige Hohlräume verbracht werden sollen. Beide genannten Vorschläge führen nicht zu wesentlichen Eigenschaftsveränderungen der eingesetzten asbesthaltigen Materialien. Es wird lediglich das Ziel der geordneten Entworgung verfolgt, so daß die latente Gefahr der Faserfreisetzung nicht beseitigt wird.

Zur chemischen Behandlung von Asbest wird nach einem Vorschlag der Solvay Umweltchemie GmbH, Hannover (Legat, W.: "Chemische Zersetzung von Asbest...", Manuskript zum Vortrag auf dem Asbestkongreß 1993 in Berlin anläßlich der UTECH) Flußsäure (HF) eingesetzt, wobei nach der Neutralisation Kalziumfluorid (CaF₂), Metalloxide und -hydroxide sowie silikatische Verbindungen als Rückstände anfallen. Als mögliche Wiederverwertung werden der Einsatz als Zuschlagstoff bei Zementbausteinen, als Fließmittel bei Schmelzprozessen und als Sekundärrohstoff für die Flußsäureherstellung genannt. Obgleich eingeräumt werden muß, daß mit dieser Methode Asbest in ein ungefährliches Produkt umgewandelt werden kann, steht der ökonomische und technische Aufwand nicht im Verhältnis zum Nutzen. Bei einem Asbestanteil von 30 % bezogen auf 1 Tonne zu sanierender Abfälle ist mit einem Flußsäurebedarf von mindestens 300 kg zu rechnen; der Preis für 300 kg Flußsäure liegt nach Angaben der Solvay Umweltchemie GmbH (s.o.) gegenwärtig bei 1200,- DM. Aus technischer Sicht ist außerdem Flußsäure schwer handhabbar, da sie gegen Metalle korrosiv ist, Glas auflöst, ein hohes Eindringvermögen in tierische und menschliche Gewebe aufweist, ihre Dämpfe die Atemwege schädigen u.a..

Als weiterer Nachteil des Verfahrens ist das Abwasser anzusehen, das durch die Neutralisation und das Waschen der Reaktionsprodukte anfällt und das einer gesonderten Behandlung zugeführt werden muß.

Die Vorschläge zur thermischen Asbestsanierung gehen von den aus der mineralogischen Literatur gut bekannten temperaturabhängigen Strukturumwandlungen der Asbestminerale aus (Strübel, G.: "Neue Verfahrer zur Behandlung asbesthaltiger Abfälle - Thermische Behandlung, Manuskript zum Vortrag auf dem Asbestkongreß 1993 in Berlin anläßlich der UTECH). Danach spalten die Asbestminerale wie Chrysotil, Anthophyllit, Amosit, Aktinolith, Tremolit, Krokydolith u.a. im Temperaturbereich zwischen 400 und 1000 °C ihre Hydroxylgruppen unter Bildung schwach hydratisierter amorpher Phasen ab. Die technische Umsetzung erfolgt nach einem Verfahrensvorschlag von Johannes Dieter in Dortmund (zitiert bei Strübel, G. s.o.) mittels eines indirekt beheizten Drehrohrofens. Ein anderer Verfahrensvorschlag zur thermischen Asbestsanierung geht von der Überführung asbesthaltiger Abfälle in inerte deponiefähige Gläser aus. Im Temperaturbereich von 1300 bis 1400 °C werden die geshredderten asbesthaltigen Abfälle in einem Drehrohrofen behandelt (Adie, D.: "Verglasung, die saubere Lösung", Manuskript zum Vortrag auf dem Asbestkongreß 1993 in Berlin anläßlich der UTECH). Der generelle Nachteil bei den sehr einsichtigen thermischen Verfahren ist das nicht vermeidbare Mitverbrennen von Kunststoffen und das damit verbundene Angasproblem. Eine erfolgreiche Anwendung des Verfahrens setzt die sortenreine Trennung der zu behandelnden Abfälle voraus, was den vermeindlichen Vorteil der thermischen Behandlung wieder aufhebt. "Für die Behandlung von Asbestabfällen in einem Glasschmelzprozeß muß nach derzeitigen Kenntnissen mit Kosten von etwa 1.000,- bis 2.000,- DM/t Asbesttrockenmasse gerechnet werden" (aus Rosenbusch, K. Umweltbundesamt Berlin, Manuskript zum Vortrag vor dem Fachverband Asbest-Sanierung e.V. Köln 1991).

Die US 4 846 408 beschreibt ein Verfahren zur Aufbereitung von Aramidfasern zu einem Fasermaterial mit einer mittleren Faserlänge von etwa 2,5 cm. Dabei wird eine mit Harz imprägnierte Aramidfaser zunächst durch Tieftemperaturbehandlung bis zum Brüchigwerden gekühlt und anschließend vermahlt. Das Derwent-Abstract der JP-A-78-42938 beschreibt ein Verfahren, in dem anorganische Fasern mit einer Flüssigkeit vermischt, das Gemisch gebrochen und das gebrochene Gemisch in große Mengen einer Flüssigkeit gegeben wird, um die anorganischen Fasern gleichmäßig zu dispergieren. Das Derwent-Abstract der JP-A-88-019434 beschreibt hochwertige Schichtbauelemente, deren Schichten gebildet werden aus geblähten Polystyrolkörnern und einem Material, das erhalten wird durch Abkühlen von mit Epoxid gefülltem Glasfaserabfall auf -120 bis -160°C, Brechen und Schleifen desselben Materials.

Der Erfindung liegt die Aufgabe zugrunde, die aufgezeigten Nachteile der genannten Verfahrensvorschläge durch eine einfache Technologie zu ersetzen, bei der weder die latente Gefahr der Faserfreisetzung noch Abwasser- und Abgasprobleme auftreten.

Dies geschieht nach Gegenstand der Erfindung, indem natürliche oder synthetische Faserstoffe bzw. Faserstoffe enthaltende Materialien durch Kältebehandlung derart nachhaltig versprödet werden, daß bei einem anschließenden, mehrstufigen Mahlverfahren ein vollständiger selektiver Aufschluß erreicht wird. Als Suspension aufgeschlämmt, läßt sich dieses Mahlgut in einem speziell für diese Aufgabe entwickelten Fliehkraftreaktor faserfrei verreiben. Die anfallenden faserfreien Produkte haben ohne Einschränkung Baustoffqualität.

Insbesondere Asbestminerale wie Chrysotil, Krokydolith und Amosit zeichnen sich durch hohe Elastizitätsmodule (30.000 - 190.000 N/mm²) aus. Bei der Kaltversprödung mit flüssigem Stickstoff sinkt die Elastizität um einige Zehnerpotenzen ab. Diese Erfahrungen wurden auch bei der Versprödung anderer elastischer Stoffe gemacht (gas aktuell 45, 1993, Berichte aus Forschung und Technik, Messer Griesheim GmbH, 47757 Krefeld). Bei der im wesentlichen durch Stoßbeanspruchung gekennzeichneter Schwingmahlung von versprödetem faserhaltigen Materialien, insbesondere Asbestbeton wird erreicht, daß die Fasern soweit aufgeschlossen vorliegen, daß sie bei einer anschließenden selektiv reibenden Beanspruchung im Zentrifugalfeld vollständig pulverisiert werden können.

Der erfindungswesentliche Fliehkraftreaktor wurde speziell für die gestellte Aufgabe der Zerstörung von aufgeschlossenem natürlichen und synthetischen Fasermaterial entwickelt. Es handelt sich um ein horizontal angeordnetes Rohr, das durch einen Exzenter zu einer Kreisbewegung von 200 mm angeregt wird, so daß die kontinuierlich aufgegebenen faserhaltigen Suspensionen im Zentrifugalfeld selektiv zerrieben werden. Durch ggf. zusätzliche Verwendung von 20 % Kugeln aus Keramik, Glas oder Stahl können Agglomeratbildungen, die die Fasern einschließen, vermieden werden. Die den Fliehkraftreaktor verlassende Suspension hat bei der Behandlung asbesthaltiger Materialien einen hohen basischen pH-Wert, der eine Flockung der Suspension und damit das Filtrationsverhalten begünstigt. Das feuchte Material kann durch Wärmebehandlung unmittelbar zur Herstellung von Formsteinen dienen; getrocknet besitzt es ohne Einschränkung Baustoffqualität.

Das Verfahren wird nachfolgend anhand von vier Beispielen erläutert:
1. Ein vorzerkleinerter Spritzasbestabfall mit 70 % Asbestanteil wurde mit flüssigem Stickstoff kaltversprödet. Danach erfolgte eine zweistufige Schwingmahlung zum Faseraufschluß. Die Faserzerstörung wurde im Zentrifugalfeld eines Fliehkraftreaktors vorgenommen, wobei die Feststoffkonzentration 500 g/l betrug. Die Untersuchung der Faserkonzentration nach den VDI-Richtlinien 3492 zur "Messung anorganischer faserförmiger Partikel..." verlief negativ.
2. Asbestbeton mit 10 % Asbestinhalt wurde in gleicher Weise wie im Beispiel 1 nach Vorzerkleinerung kaltversprödet, zweistufig schwinggemahlen und anschließend im Zentrifugalfeld eines Fliehkraftreaktors behandelt. Die Faserkontrolle nach den VDI-Richtlinien 3492 verlief ebenfalls negativ.
3. Geshredderte Glaswolle wurde mit flüssigem Stickstoff kaltversprödet, einer zweistufigen Schwingmahlung unterzogen und anschließend im Fliehkraftreaktor reibend beansprucht. Die Faserkontrolle erfolgte wiederum in Anlehnung an die VDI-Richtlinien 3492. Es konnten keine Fasern festgestellt werden.
4. Der faserfreie Rückstand von Asbestbeton nach Beispiel 2 wurde nach Entwässerung auf 30 % Feuchte in einen Prüfkörper überführt. Als Erstarrungszeit wurden 3 Minuten festgestellt, welches einem Gipsbinder entspricht. Die Überprüfung der Druckfestigkeit ergab nach 3 Tagen 15 MPa.

## Patentansprüche

1. Verfahren zur Aufbereitung von natürlichen bzw. synthetischen anorganischen oder organischen Faserstoffen und faserstoffhaltigen Materialien zu faserfreien Stoffsuspensionen bzw. Pulvern, wobei eine Kombination von Kaltversprödung und mehrstufiger Aufschlußmahlung erfolgt, **dadurch gekennzeichnet**, daß zusätzlich eine weitere selektive Zerreibung der aufgeschlossenen Fasern im Zentrifugalfeld erfolgt.

2. Verfahren nach Anspruch 1, dadurch gekennzeichnet, daß es sich insbesondere um asbesthaltige Materialien handelt.

3. Verfahren nach den Ansprüchen 1 und 2, dadurch gekennzeichnet, daß die Kaltversprödung mit flüssigem Stickstoff erfolgt.

4. Verfahren nach den Ansprüchen 1 bis 3, dadurch gekennzeichnet, daß die mehrstufige Aufschlußmahlung in Schwingmühlen erfolgt.

5. Verfahren nach den Ansprüchen 1 bis 4, dadurch gekennzeichnet, daß für die Behandlung im Zentrifugalfeld ein Fliehkraftreaktor eingesetzt wird.

6. Verfahren nach Anspruch 5, dadurch gekennzeichnet, daß der Fliehkraftreaktor für die kontinuierliche Behandlung von Suspensionen ausgelegt ist.

7. Verfahren nach den Ansprüchen 1 bis 6, dadurch gekennzeichnet, daß die erzeugten Stoffsuspensionen durch Wärmebehandlung direkt zu Formsteinen verarbeitet werden.

8. Verfahren nach den Ansprüchen 1 bis 6, dadurch gekennzeichnet, daß die faserfreien Suspensionen entwässert und getrocknet als Rohstoff zur Verfügung gestellt werden.

## Claims

1. A procedure for processing natural or synthetic, inorganic or organic fibers and fiber-containing materials into fiber-free material suspensions or powders, wherein a combination of cold-embrittlement and multiple-stage disintegrative grinding takes place, characterized in that an additional selective pulverization of the pulped fibers takes place in a centrifugal field.

2. A procedure according to claim 1, characterized in that in particular asbestos-containing materials are involved.

3. A procedure according to claims 1 and 2, characterized in that cold embrittlement takes place with liquid nitrogen.

4. A procedure according to claims 1 to 3, characterized in that multiple-stage disintegrative grinding takes place in vibrating mills.

5. A procedure according to claims 1 to 4, characterized in that a centrifugal reactor is used for treatment in the centrifugal field.

6. A procedure according to claim 5, characterized in that the centrifugal reactor is designed for the continuous treatment of suspensions.

7. A procedure according to claims 1 to 6, characterized in that the generated material suspensions are directly processed into shaped bricks via heat treatment.

8. A procedure according to claims 1 to 6, characterized in that the fiber-free suspensions are provided as a dehydrated and dried raw material.

## Revendications

1. Procédé de transformation de matières fibreuses naturelles ou synthétiques, organiques ou inorganiques, ou de matériaux comprenant des matières fibreuses, en suspensions pâteuses sans fibres ou en poudres sans fibres, dans lequel on procède à une combinaison de fragilisation par le froid et une désagrégation par broyage à plusieurs étapes, caractérisé en ce que l'on procède en outre à une pulvérisation supplémentaire sélective des fibres désagrégées dans un champ centrifuge.

2. Procédé selon la revendication 1, caractérisé en ce qu'il s'agit plus particulièrement de matériaux comprenant de l'asbeste.

3. Procédé selon les revendications 1 ou 2, caractérisé en ce que la fragilisation par le froid est effectuée par de l'azote liquide.

4. Procédé selon les revendications 1 à 3, caractérisé en ce que la désagrégation par broyage à plusieurs étapes s'effectue dans un désintégrateur oscillatoire.

5. Procédé selon les revendications 1 à 4, caractérisé en ce que pour le traitement dans un champ centrifuge on prévoit un réacteur à force centrifuge.

6. Procédé selon la revendication 5 caracétrisé en ce que le réacteur à force centrifuge est conçu pour un traitement en continu de suspensions.

7. Procédé selon les revendications 1 à 6 caractérisé en ce que les suspensions pâteuse obtenues sont transformées directement par traitement thermique en pièce moulée.

8. Procédé selon les revendications 1 à 6, caractérisé en ce que les suspensions libres de toutes fibres sont drainées et séchées et mise à disposition comme matière première.
